## Europäisches Patentamt

## European Patent Office

## Office européen des brevets

(19)

(11) Veröffentlichungsnummer: **0 230 523**
**B1**

(12) **EUROPÄISCHE PATENTSCHRIFT**

(45) Veröffentlichungstag der Patentschrift:
**25.01.89**

(51) Int. Cl.⁴: **B60K 23/08**

(21) Anmeldenummer: **86114586.0**

(22) Anmeldetag: **21.10.86**

(54) Allradantrieb für ein Kraftfahrzeug.

(30) Priorität: **31.01.86 DE 3602930**

(43) Veröffentlichungstag der Anmeldung:
**05.08.87 Patentblatt 87/32**

(45) Bekanntmachung des Hinweises auf die Patenterteilung:
**25.01.89 Patentblatt 89/4**

(84) Benannte Vertragsstaaten:
**AT BE CH DE ES FR GB IT LI NL SE**

(56) Entgegenhaltungen:
**DE-A- 3 309 200**
**DE-A- 3 317 247**
**DE-A- 3 427 725**
**DE-A- 3 502 524**
**DE-A- 3 513 888**
**DE-C- 3 507 490**

(73) Patentinhaber: **Dr.Ing.h.c. F. Porsche Aktiengesellschaft, Porschestrasse 42, D-7000 Stuttgart 40(DE)**

(72) Erfinder: **Müller, Robert, Badstrasse 21, D-7251 Mönsheim(DE)**

ACTORUM AG

## Beschreibung

Die Erfindung betrifft einen Allradantrieb für ein Kraftfahrzeug mit einem Sperrsystem nach dem Oberbegriff des Anspruchs 1.

Bei einem Allradantrieb, wie er in der DE-C 3 507 490 (veröffentlicht am 13.3.1986) beschrieben ist, ist ein solches Sperrsystem in den Antriebsstrang Vorderachse-Hinterachse eingesetzt. Es besteht aus einem den direkten Durchtrieb vermittelnden Planetengetriebe und einer an ihm angreifenden Bremsvorrichtung. Um das erforderliche Bremsmoment und die Bremsvorrichtung klein zu halten, ist das Übersetzungsverhältnis der Zahnradübersetzung zur Bremsvorrichtung wesentlich höher ausgelegt als das Übersetzungsverhältnis für den Direktdurchtrieb, das geringfügig von 1:1 abweicht. Optimal werden diese Merkmale mit einem Planetengetriebe verwirklicht, das unter der Bezeichnung Wolfrom-Getriebe bekannt ist. Es besteht aus einem Eingangssonnenrad, einem axial daneben gelagerten und mit der anzutreibenden Achse verbundenen Ausgangssonnenrad etwas größerer Zähnezahl sowie aus den mit den beiden Sonnenrädern kämmenden Planetenrädern, die an einem Planetenträger gelagert sind. Mit dem Planetenträger ist eine Fliehkraft-Bremsvorrichtung verbunden, die wirksam wird, sobald der Planetenträger bei einer Drehzahldifferenz zwischen der treibenden Vorderachse und der Hinterachse in Umdrehung versetzt wird. Das mit der Drehzahldifferenz progressiv ansteigende Bremsmoment der Fliehkraftbremse bewirkt eine Drehmomentübertragung und damit eine automatische Zuschaltung der Hinterachse. Der Planetenträger steht nur bei 100%igem Synchronlauf beider Achsen still, was praktisch nie erreicht wird; deshalb kann man einen Allradantrieb mit diesem Sperrsystem auch als permanenten Allradantrieb bezeichnen.

Die Aufgabe der Erfindung besteht darin, ein solches Sperrsystem so im Antriebsstrang des Kraftfahrzeuges anzuordnen, daß eine kompakte, raumsparende Bauweise ermöglicht wird, und die durch den Einbau entstehenden Mehrkosten auf ein Minimum reduziert werden können.

Zur Lösung dieser Aufgabe dienen die kennzeichnenden Merkmale des Anspruchs 1. Wenn das Sperrsystem auf der zuzuschaltenden Achse, beispielsweise bei einem frontgetriebenen Kraftfahrzeug auf der Hinterachse angeordnet ist, läßt es sich so in das Hinterachsgehäuse integrieren, daß eine kompakte, raumsparende Antriebseinheit entsteht.

In einer bevorzugten Ausführungsform der Erfindung nach Anspruch 2 sind an der zuschaltbaren, zweiten Fahrzeugachse zwei Sperrsysteme angeordnet, die jeweils einem Fahrzeugrad benachbart sind und von einer mittigen, in Fahrzeuglängsrichtung verlaufenden Antriebswelle gemeinsam angetrieben sind. Es wird somit nicht die ganze Achse, sondern jeweils nur das Fahrzeugrad zugeschaltet, das gegenüber den Rädern der anderen Achse eine Drehzahldifferenz aufweist. Beide Sperrsysteme sind starr miteinander verbunden und werden auch dann wirksam, wenn das eine Rad der Achse gegenüber dem anderen Rad einen Drehzahlunterschied aufweist. Diese beiden Sperrsysteme machen ein Differentialgetriebe überflüssig und bewirken neben der Allrad-Längssperre auch eine Quersperre für die Räder der Achse, auf der sie montiert sind. Da ein Differentialgetriebe entfallen kann, ist der Mehrpreis gegenüber einem Kraftfahrzeug ohne Allradantrieb nur gering.

Die beiden in ihren Abmessungen gleichen Sperrsysteme sind symmetrisch zur Längsachse des Kraftfahrzeugs so angeordnet, daß ihre Bremsvorrichtungen jeweils einem Fahrzeugrad zugewandt sind. Die Eingangssonnenräder ihrer Planetengetriebe sind über zentrale Wellen angetrieben, die zusammengeflanscht sind und über einen Kegelrad-Winkeltrieb von deren Längsrichtung des Kraftfahrzeugs verlaufenden Antriebswelle gemeinsam angetrieben sind. Die Längswelle und der Winkeltrieb sind in einem Mittengehäuse untergebracht, an das zu beiden Seiten zwei gleich gestaltete Gehäusekappen angeflanscht sind, in denen die Sperrsysteme untergebracht sind. Die beiden Gehäusekappen bilden mit dem Mittengehäuse ein kompaktes Achsgehäuse mit glatt ineinander übergehenden Außenkonturen, dessen Außendurchmesser kleiner sein kann als bei einem herkömmlichen Achsgehäuse, da der Kegelrad-Winkeltrieb kleiner baut als das bisher immer nötige Differentialgetriebe mit Tellerrad.

Ein Ausführungsbeispiel der Erfindung ist in der Zeichnung dargestellt und wird nachfolgend erläutert.

Es zeigt

Fig. 1 einen prinzipiellen Aufbau eines bei der Erfindung verwendeten Allrad-Sperrsystems,

Fig. 2 Hinterachsgehäuse mit Antriebs- und Sperrsystem im Längsschnitt,

Fig. 3 Draufsicht auf das Hinterachsgehäuse,

Fig. 4 Querschnitt nach Linie IV–IV der Fig. 2 mit Fliehkraftbremse.

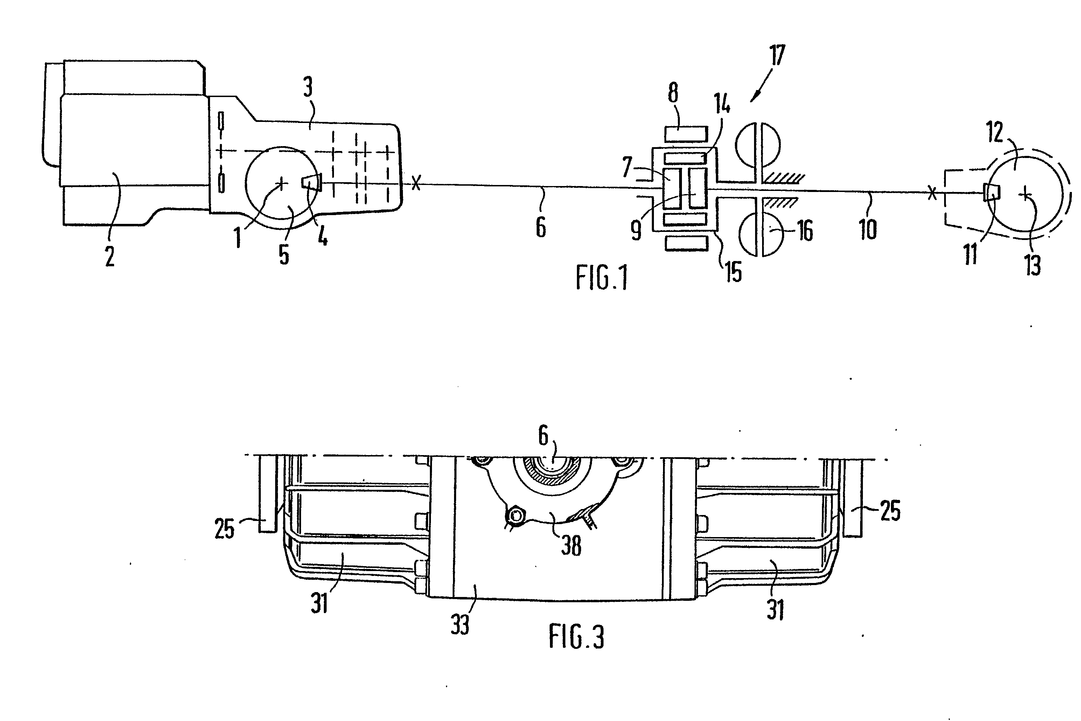

Die Wirkungsweise des erfindungsgemäßen Allradantriebs soll zuerst anhand der Fig. 1 erläutert werden. Ein nahe der Vorderachse 1 an einem Kraftfahrzeug angeordneter Antriebsmotor 2 treibt mit einem an ihm angebauten Gangschaltgetriebe 3 über ein Kegelrad 4 und ein Tellerrad 5 die Vorderachse 1 an. Von dem Kegelrad 4 führt eine Antriebswelle 6 zu einem Eingangssonnenrad 7 eines Planetengetriebes 8. Koaxial zum Eingangssonnenrad 7 ist neben ihm ein Ausgangssonnenrad 9 gelagert, von dem eine Abtriebswelle 10 zu einem Kegelrad 11 führt, das mit einem Tellerrad 12 der Hinterachse 13 kämmt.

Mit dem Eingangssonnenrad 7 und dem Ausgangssonnenrad 9 stehen Planetenräder 14 in Eingriff, die an einem Planetenträger 15 gelagert sind, der mit dem Bremsglied einer Bremsvorrichtung 16 starr verbunden ist. Ein solches Planetengetriebe 8, bei dem das Eingangssonnenrad 7 und Ausgangssonnenrad 9 geringfügig unterschiedliche Zähnezahlen haben und beide Sonnenräder 7, 9 mit einem Planetenrad 14 kämmen, ist als Wolfrom-Getriebe bekannt. Das Planetengetriebe und die als Fliehkraftbremse ausgebildete Bremsvorrichtung 16 bilden zusammen ein Sperrsystem 17, das hier im Längs-Antriebsstrang des Kraftfahrzeugs eingebaut ist. In diesem Ausführungsbeispiel hat das Eingangssonnenrad 7 46 Zähne, das Ausgangssonnenrad 9 44 Zähne, jedes Planetenrad 14 weist 14 Zähne auf. Bei der gewählten Durchtriebsübersetzung von 44:46 beträgt die Übersetzung zum Planetenträger 22:1, d.h., die Drehzahl des Planetenträgers 15 ist 22mal höher als die Drehzahldifferenz zwischen Vorderachse 1 und Hinterachse 13. Um die Gesamtübersetzung Vorderachse 1 zu Hinterachse 15 von der Auslegung her 1:1 zu machen, sind die Kegelrad-Tellerrad-Übersetzungen zur Vorderachse 1 und Hinterachse 13 reziprok zur Durchtriebsübersetzung gewählt; sie betragen bei der Vorderachse 23:33, bei der Hinterachse 33:22, so daß das Produkt aus Durchtriebsübersetzung, Übersetzung zur Vorderachse 1 und Übersetzung zur Hinterachse 13 gleich 1:1 wird.

Bei einer durch die Straßenverhältnisse bedingten Drehzahldifferenz Vorderachse-Hinterachse läuft der Planetenträger mit 22facher Drehzahl um. Da er starr mit dem Bremselement einer Fliehkraftbremse 16 gekoppelt ist, läuft auch dieses mit gleicher Drehzahl um. Es wird entsprechend der progressiv ansteigenden Drehmoment-Drehzahl-Kennlinie abgebremst und übt am Planetenträger 15 ein gleiches Moment aus, das nun als Stützmoment für die Standübersetzung des Wolfrom-Getriebes und somit für die Antriebsmomentübertragung zur Hinterachse 13 zur Verfügung steht.

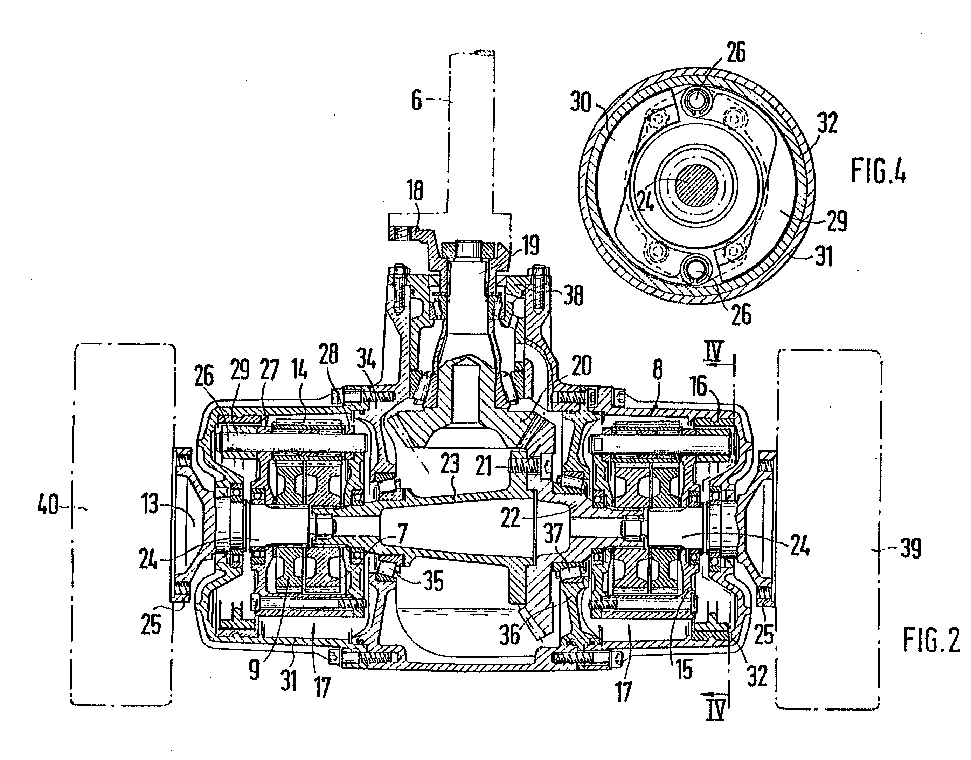

In Fig. 2 ist eine beispielshafte konstruktive Ausführung des erfindungsgemäßen Allradantriebs dargestellt, wobei die bereits in Fig. 1 gezeigten Bauteile des Sperrsystems 17 die gleiche Numerierung tragen. Ein mit der Vorderachse 1 in Antriebsverbindung stehender Kupplungsring 18 ist auf dem Zapfen 19 eines Kegelrads 20 mit einer Kerbzahnverbindung befestigt. Das Kegelrad 20 kämmt mit einem zweiten Kegelrad 21 und bildet mit ihm zur Hinterachse 13 hin einen Winkeltrieb, mit dem die beiden rechts und links auf der Hinterachse 13 angeordneten Sperrsysteme 17 angetrieben sind. Die beiden Sperrsysteme 17 sind gleich gestaltet und bemessen und symmetrisch zur Längsmittelachse des Kraftfahrzeugs so eingebaut, daß ihre Fliehkraftbremsen 16 den zugehörigen Fahrzeugrädern zugewandt sind. Jedes der beiden Hinterräder 39, 40 ist somit getrennt von der Vorderachse 1 aus getrieben, sobald es eine Drehzahldifferenz zur Vorderachse 1 aufweist. Hierzu ist das Kegelrad 21 nach rechts hin mit einem Zapfen 22 versehen, der in dem Eingangssonnenrad 7 des rechten Planetengetriebes 8 drehfest ist. Der Antrieb zur linken Seite hin läuft über eine an das Kegelrad 21 angeflanschte Hohlwelle 23, die in dem Eingangssonnenrad 7 des linken Planetengetriebes 8 drehfest arretiert ist. Zentral in der Hohlwelle 23 ist eine Ausgangswelle 24 gelagert, an der ein Radflansch 25 für das linke Hinterrad 40 angebracht ist. Eine gleiche Ausgangswelle 24 mit Radflansch 25 für das rechte Hinterrad 39 ist zentral im Zapfen 22 des Kegelrads 21 gelagert. Die Ausgangswellen 24 sind mit Kerbzahnverbindung in den Ausgangssonnenrädern 9 befestigt.

Mit den Sonnenrädern stehen Planetenräder 14 in Eingriff und sind auf Lagerbolzen 26 der Planetenträger 15 gelagert. Als Planetenträger 15 dienen zwei beidseits der Sonnenräder 7, 9 auf den Ausgangswellen 24 bzw. dem Zapfen 22 und der Hohlwelle 23 gelagerte Platten 27, 28. Auf den vorderen Enden der Lagerbolzen 26 sind diametral gegenüberliegend zwei mit Bremsbelägen versehene Bremsbacken 29, 30 schwenkbar gelagert und durch Spreizringe axial gesichert. Die mit den Planetenträgern rotierenden Bremsbacken 29, 30 werden durch Fliehkraft an die in den Gehäusekappen 31 befestigten Bremsringe 32 angedrückt. Die Gehäusekappen 31 haben eine zum Gießen einfache, zylindrische Form und sind von links und rechts bündig an ein T-förmiges Mittengehäuse 33 angeflanscht.

An der Trennebene zur linken Gehäuseebene 31 ist am Mittengehäuse 33 eine Lagerplatte 34 angegossen, die das Hauptlager 35 für die Hohlwelle 23 trägt. An der Trennebene zur rechten Gehäusekappe 31 ist zwischen ihr und dem Mittengehäuse 33 eine Lagerplatte 36 angeschraubt, in der das Hauptlager 37 für den Zapfen des Kegelrades 22 des Kegelrades 21 befestigt ist. Für beide Hauptlager 35, 37 sind Kegelrollenlager verwendet. Sie sind so eingebaut, daß sie den von dem Kegelrad-Winkeltrieb 20, 21 herrührenden Axialschub bei Linkslauf und Rechtslauf der von der Vorderachse 1 ausgehenden Antriebswelle 6 aufnehmen können, die über den Kupplungsring 18 das Kegelrad 20 antreibt. Der Zapfen des Kegelrads 20 ist an der einen Seite direkt im Mittengehäuse 33, an der anderen Seite in einer Lagerhülse 38 gelagert, die in das Mittengehäuse abgedichtet und eingepaßt und stirnseitig an ihm angeflanscht ist.

Die Übersetzung des vorderen Winkeltriebs beträgt 23:32, die Kegelradwinkeltrieb-Übersetzung zur Hinterachse 33:22, die Durchtriebsübersetzung der Planetengetriebe 44:46, so daß das Produkt der drei Übersetzungen gleich 1:1 wird und beide Hinterräder 39, 40 auf Synchronlauf mit den Rädern der Vorderachse 1 ausgelegt sind. Bei einer Drehzahldifferenz zwischen Vorderachse 1 und einem der Hinterräder erzeugt der 22mal schneller umlaufende Planetenträger in der diesem Rad zugeordneten Fliehkraftbremse ein mit der Drehzahldifferenz progressiv, beispielsweise quadratisch ansteigendes Bremsmoment, das als Antriebsmoment für diesen Antriebsstrang zur Verfügung steht. Auch bei einer Drehzahldifferenz zwischen den beiden Hinterrädern 39, 40 bauen die Sperrsysteme 17 Bremsmomente auf und schaffen damit eine Quersperre zwischen den beiden Hinterrädern 39, 40. Die Sperrsysteme 17 ersetzen ein herkömmliches, durch eine Bremse, z.B. eine Lamellenbremse sperrbares Differentialgetriebe. Aufgrund der progressiven Kennlinie der Sperrsysteme 17 sind sie als Quersperre weit besser geeignet als für diesen Zweck verwendete Viskokupplungen mit degressiv verlaufenden Drehmoment-Drehzahldifferenz-Kennlinien.

**Patentansprüche**

1. Allradantrieb für ein Kraftfahrzeug, mit einer vom Fahrzeugmotor bzw. dessen Gangschaltgetriebe dauernd antreibbaren ersten Achse, mit der zwei Fahrzeugräder einer zweiten Achse über ein selbsttätig wirkendes Sperrsystem in Antriebsverbindung bringbar sind, wobei das Sperrsystem aus einem aus Sonnenrädern, Planetenrädern und einem Planetenradträger gebildeten Planetengetriebe mit einer nur geringfügig von 1:1 abweichenden Durchtriebsübersetzung und einer am Planetengetriebe mit großer Übersetzung angreifenden Bremsvorrichtung besteht, dadurch gekennzeichnet, daß mindestens ein Sperrsystem (17) an der zweiten Achse (Hinterachse 13) in direkter Antriebsverbindung mit einem Fahrzeugrad (39) stehend angeordnet ist.

2. Allradantrieb nach Anspruch 1, dadurch gekennzeichnet, daß zwei Sperrsysteme (17) an der zweiten Achse (Hinterachse 13) angeordnet sind, wobei ein Sperrsystem (17) dem rechten Fahrzeugrad (40), ein Sperrsystem (17) dem linken Fahrzeugrad (39) zugeordnet ist.

3. Allradantrieb nach Anspruch 1 und 2, dadurch gekennzeichnet, daß das Planetengetriebe (8) des Sperrsystems (17) aus einem Eingangssonnenrad (7), einem koaxial daneben gelagerten und mit dem zu treibenden Fahrzeugrad (39 bzw. 40) verbundenen Ausgangssonnenrad (9) etwas größerer Zähnezahl sowie aus den mit beiden Sonnenrädern in Eingriff stehenden Planetenrädern (14) eines Planetenträgers (15) gebildet ist, wobei die Übersetzung vom Eingangssonnenrad (7) zum Planetenträger (15) etwa 22:1 beträgt.

4. Allradantrieb nach Anspruch 2, dadurch gekennzeichnet, daß beide Sperrsysteme (17) mit einer in Fahrzeuglängsrichtung verlaufenden Antriebswelle (6) gemeinsam über einen Winkeltrieb (20, 21) angetrieben sind.

5. Allradantrieb nach Anspruch 3 und 4, dadurch gekennzeichnet, daß der Winkeltrieb aus einem zur Antriebswelle (6) koaxialen Kegelrad (20) und einem zur zweiten Achse (13) koaxialen Kegelrad (21) besteht, dessen Zapfen drehfest mit dem Eingangssonnenrad (7) des rechten Planetengetriebes (8) verbunden ist, wogegen das Eingangssonnenrad (7) des linken Planetengetriebes (8) über eine zentrisch in ihm befestigte Welle (Hohlwelle 23) mit dem Kegelrad (21) drehfest verbunden ist.

6. Allradantrieb nach einem der Ansprüche 2 bis 5, dadurch gekennzeichnet, daß jedes Sperrsystem (17) von einer Gehäusekappe (31) umschlossen und in ihr gelagert ist, und daß beide Gehäusekappen (31) an ein den Winkeltrieb (20, 21) umschließendes Mittengehäuse (33) angeflanscht sind.

7. Allradantrieb nach Anspruch 6, dadurch gekennzeichnet, daß am Mittengehäuse (33) an der Trennebene zur linken Gehäusekappe (31) eine Lagerplatte (34) für die Hohlwelle (23) angegossen ist, und daß zwischen dem Mittengehäuse (33) und der rechten Gehäusekappe (31) eine Lagerplatte verschraubt ist, in der der Zapfen (22) des Kegelrades (21) gelagert ist.

8. Allradantrieb nach Anspruch 1, dadurch gekennzeichnet, daß als Bremsvorrichtung (16) eine Fliehkraftbremse dient, deren Bremsbacken (29, 30) auf den den Fahrzeugrädern (39, 40) zugewandten Enden von an den Planetenträgern (15) befestigten Lagerbolzen (26) schwenkbar gelagert sind.

9. Allradantrieb nach einem der Ansprüche 1 bis 8, dadurch gekennzeichnet, daß als Bremsvorrichtung (16) eine hydrodynamische Bremse, eine elektrische Wirbelstrombremse oder eine von außerhalb gesteuerte Scheiben- bzw. Lamellenbremse verwendet ist.

10. Allradantrieb nach einem der Ansprüche 1 bis 9, dadurch gekennzeichnet, daß die Bremsvorrichtung (16) außerhalb des Gehäuses (31, 33) angeordnet ist.

**Revendications**

1. Entraînement pour véhicule automobile à quatre roues motrices, avec un premier essieu susceptible d'être entraîné en permanence par un moteur de véhicule automobile, respectivement par sa boîte de vitesse, avec lequel deux roues de véhicule d'un deuxième essieu sont susceptibles d'être placées en liaison d'entraînement par un système de blocage agissant automatiquement, le système de blocage se composant à cette occasion d'une transmission planétaire formée de roues solaires, de roues planétaires et d'une cage de transmission planétaire, et d'un dispositif de freinage agissant sur la transmission planétaire avec une rapport de transmission plus important, caractérisé en ce qu'au moins un système de blocage (17) est disposé sur le deuxième essieu (essieu arrière 13) en liaison d'entraînement directe avec la roue de véhicule (39).

2. Entraînement à quatre roues motrices selon la revendication 1, caractérisé en ce que deux systèmes de blocage (17) sont disposés sur le deuxième essieu (essieu arrière 13), un système de blocage (17) étant affecté à la roue de véhicule (40) droite, un système de blocage (17) étant affecté à la roue de véhicule (39) gauche.

3. Entraînement à quatre roues motrices selon la revendication 1 et 2, caractérisé en ce que la transmission planétaire (8) du système de blocage (17) est formée à partir d'une roue solaire d'entré (7), d'une roue solaire de sortie (9) reliée à la roue de véhicule à entraîner (39, respectivement 40) montée coaxialement à côté et possédant un nombre de dents un peu plus important, ainsi que de roues planétaires (14) d'une cage de transmission planétaire (15), roues en prise sur les deux roues solaires, le rapport de transmission de la roue solaire d'entrée (7) à la cage de transmission planétaire (115) étant approximativement de 22:1.

4. Entraînement à quatre roues motrices selon la revendication 2, caractérisé en ce que les deux systèmes de blocage (17) sont entraînés en commun par une transmission de renvoi d'angle (20, 21), avec un arbre d'entraînement (6) se développant en direction longitudinale de véhicule.

5. Entraînement à quatre roues motrices selon la revendication 3 et 4, caractérisé en ce que la transmission de renvoi d'angle se compose d'une roue conique (20) coaxiale par rapport à l'arbre d'entraînement (6) et d'une roue conique (21) coaxiale par rapport au deuxième essieu (13), dont le tourillon est relié fixe en rotation à la roue solaire d'entrée (7) de la transmission planétaire (8) droite, où par contre la roue solaire d'entrée (7) de la transmission planétaire (8) gauche est reliée fixe en rotation à la roue conique (21), par un arbre (arbre creux 23) fixé centralement à l'intérieur de celle-ci.

6. Entraînement à quatre roues motrices selon l'une des revendications 2 à 5, caractérisé en ce que chaque système de blocage (17) est entouré par un capot de carter (31) et est monté à l'intérieur, et en ce que les deux capots de carter (31) sont bridés sur un carter central (33) entourant la transmission de renvoi d'angle (20, 21).

7. Entraînement à quatre roues motrices selon la revendication 6, caractérisé en ce qu'une plaque support (34) est coulée pour l'arbre creux (23) sur le carter central (33) au plan de joint allant vers le capot de carter (31) gauche, et en ce qu'entre le carter central (33) et le capot de carter (31) droit une plaque support est vissée, dans laquelle est monté le tourillon (22) de la roue conique (21).

8. Entraînement à quatre roues motrices selon la revendication 1, caractérisé en ce qu'un frein centrifuge sert de dispositif de freinage (16), dont les mâchoires de frein (29, 30) sont montées pivotantes sur les extrémités de boulons support (26) fixés sur les cages de transmission (15) planétaires et tournées vers les roues de véhicules (39, 40).

9. Entraînement à quatre roues motrices selon l'une des revendications 1 à 8, caractérisé en ce qu'un frein hydrodynamique, un frein à courant de Foucault ou un frein à disques, respectivement à lamelles commandé de l'extérieur est utilisé pour dispositif de freinage (16).

10. Entraînement à quatre roues motrices selon l'une des revendications 1 à 9, caractérisé en ce que le dispositif de freinage (16) est disposé à l'extérieur de carter (31, 33).

## Claims

1. All-wheel drive for a motor vehicle, having a first axle continuously drivable by the vehicle engine or by its gear change mechanism, by means of which axle two vehicle wheels of a second axle can be brought into drive connection by an automatically acting locking system consisting of a planetary gear formed from sun wheels, planet wheels and a planet carrier with a through-drive transmission deviating only slightly from 1:1 and a braking device acting on the planetary gear with high reduction, characterised in that at least one locking system (17) is fixedly arranged on the second axle (rear axle 13) in direct drive connection with a vehicle wheel (39).

2. All-wheel drive according to Claim 1, characterised in that two locking systems (17) are arranged on the second axle (rear axle 13), one locking system (17) being allotted to the right-hand vehicle wheel (40) and one locking system (17) to the left-hand vehicle wheel (39).

3. All-wheel drive according to Claim 1 and 2, characterised in that the planetary gear (8) of the locking system (17) is formed from an input sun wheel (7), an output sun wheel (9) with a slightly greater number of teeth mounted coaxially therebeside and connected with the vehicle wheel (39 or 40) to be driven, and from the planet wheels (14), in engagement with both sun wheels, of a planet carrier (15), the reduction from the input sun wheel (7) to the planet carrier (15) being about 22:1.

4. All-wheel drive according to Claim 2, characterised in that both locking systems (17) are driven together, via a V-drive (20, 21), by a drive shaft in the longitudinal direction of the vehicle.

5. All-wheel drive according to Claim 3 and 4, characterised in that the V-drive consists of a bevel wheel (20) coaxial with the drive shaft (6) and a bevel wheel (21) coaxial with the second axle (13) and having a shaft non-rotatably connected with the input sun wheel (7) of the right-hand planetary gear (8), whereas the input sun wheel (7) of the left-hand planetary gear (8) is non-rotatably connected with the bevel wheel (21) by a shaft (hollow shaft 23) secured centrically in it (the input sun wheel).

6. All-wheel drive according to one of Claims 2 to 5, characterised in that each locking system (17) is encircled by and mounted in a housing cap (31) and in that both housing caps (31) are flanged onto a central housing (33) encircling the V-drive (20, 21).

7. All-wheel drive according to Claim 6, characterised in that a bearing plate (34) for the hollow shaft (23) is moulded onto the central housing (33) at the separating plane with the left-hand housing cap (31), and in that a bearing plate is screwed down between the central housing (33) and the right-hand housing cap (31), in which bearing plate the pin (22) of the bevel wheel (21) is mounted.

8. All-wheel drive according to Claim 1, characterised in that a centrifugal force brake serves as a braking device (16), the brake pads (29, 30) of which are pivotably mounted on the ends (facing the vehicle wheels (39, 40)) of bearing bolts (26) secured on the planet carriers (15).

9. All-wheel drive according to one of Claims 1 to 8, characterised by the use, as a braking device (16), of a hydrodynamic brake, an electric eddy-current brake or a disc or multiple-disc brake controlled from outside.

10. All-wheel drive according to one of Claims 1 to 9, characterised in that the braking device (16) is arranged outside the housing (31, 33).

FIG.1

FIG.3

EP 0 230 523 B1

FIG.4

FIG.2